# EUROPEAN PATENT SPECIFICATION

(11) **EP 2 464 592 B1**
(45) Date of publication and mention of the grant of the patent: **07.05.2014**
(21) Application number: 10833665.2
(22) Date of filing: 22.11.2010
(51) Int. Cl.: B66C 23/697, B66C 23/70, F16C 29/02, F16C 33/10, F16C 35/02

(54) **TELESCOPIC DEVICE COMPRISING A SLIDING ELEMENT**
TELESKOPVORRICHTUNG MIT EINEM SCHIEBEELEMENT
DISPOSITIF TÉLESCOPIQUE COMPORTANT UN ÉLÉMENT COULISSANT

(30) Priority: 30.11.2009 SE 0950915
(43) Date of publication of application: 20.06.2012
(73) Proprietor: Cargotec Patenter AB, 341-81 Ljungby (SE)
(72) Inventor: NILSSON, Johan, SE-824 42 Hudiksvall (SE)
(74) Representative: Löfgren, Jonas
(86) International application number: PCT/SE2010/051284
(87) International publication number: WO 2011/065900

(56) References cited:
- CN-Y- 2 356 210
- CN-Y- 201 358 141
- CN-Y- 201 358 141
- DE-A1-102006 023 963
- DE-A1-102007 050 632
- DE-U1- 29 804 237
- DE-U1- 29 804 237
- FR-A1- 2 759 687
- JP-A- 2008 030 934
- JP-U- 58 072 252
- JP-U- 58 165 050
- JP-U- 60 133 892
- JP-U- S60 133 892
- US-A- 3 796 016
- US-A- 3 796 016

## Description

### FIELD OF THE INVENTION AND PRIOR ART

The present invention relates to a telescopic device, particularly in the form of a telescopic crane boom or a telescopic support leg, according to the preamble of claim 1.

Extendable and retractable telescopic devices with two or more mutually displaceable telescopic parts are common in different types of apparatuses and machines and may for instance have the form of crane booms, support legs, rods, pillars etc. Hydraulic cranes are for instance often provided with one or more telescopic devices in the form of telescopic crane booms where the respective crane boom comprises two or more mutually displaceable telescopic parts in the form of telescopically displaceable crane boom parts. When the mutually displaceable telescopic parts are heavy and/or made of a material with comparatively high coefficient of friction, sliding elements of a material with lower coefficient of friction are often arranged between the telescopic parts in order to facilitate a mutual sliding movement between the telescopic parts and in order to protect the telescopic parts from wearing. Such a sliding element has to be attached in a suitable manner to one of the telescopic parts so that the sliding element is retained at the desired place between the telescopic parts.

A telescopic device according to the preamble of claim 1 is previously known from JP 2008030934 A. This known device comprises a sliding element which is provided with holes in two opposite edge surfaces. The sliding element is intended to be placed between two holding elements which are fixed to a wall of a telescopic part. Pins are pushed into said holes of the sliding element through through holes in the holding element to thereby secure the sliding element to said telescopic part.

### OBJECT OF THE INVENTION

The object of the present invention is to achieve a new and favourable manner of attaching a sliding element to a wall of a telescopic part.

### SUMMARY OF THE INVENTION

According to the present invention, said object is achieved by means of a telescopic device having the features defined in claim 1.

The telescopic device according to the present invention comprises at least two mutually displaceable telescopic parts and a sliding element, which is attachable to a wall of a first telescopic part and through which this first telescopic part is intended to be in sliding contact with a second telescopic part. The sliding element comprises a plate-shaped body with an underside, through which the sliding element is intended to rest against a support surface of the first telescopic part, and an upper side, which constitutes a sliding surface and through which the sliding element is intended to be in sliding contact with a surface of a second telescopic part. The telescopic device according to the present invention is characterized in:
- that a projection is arranged on the underside of the body, said hole or at least a part thereof being arranged in this projection;
- that said wall of the first telescopic part is provided with a recess, which is designed to receive the projection of the sliding element and which has a shape essentially corresponding to the shape of this projection to thereby limit the displaceability of the sliding element in a plane parallel to this wall when the projection is received in the recess; and
- that the telescopic device comprises a holding element, which is attachable to the first telescopic part, and a pin, which is fixed to the holding element and which is insertable into said hole of the sliding element, the pin being designed to keep the sliding element secured to the first telescopic part by engagement in the hole.

In this description and the subsequent claims, an external edge surface of the sliding element refers to an outwardly facing lateral surface of the sliding element extending at an angle, for instance perpendicularly, to the upper side of the plate-shaped body of the sliding element.

The projection of the sliding element creates a locally increased thickness of the sliding element in the part of the sliding element where the hole is arranged. Furthermore, the projection of the sliding element contributes to keep the sliding element in place to the first telescopic part and makes it possible to keep the sliding element secured to the first telescopic part by means of one single pin.

According to an embodiment of the invention, the holding element is designed to abut against an external edge surface of the sliding element, preferably against the external edge surface in which the hole is arranged, to thereby limit the displaceability of the sliding element in a plane parallel to said wall. Hereby, the holding element will contribute to keep the sliding element in place to the first telescopic part.

According to another embodiment of the invention, the holding element is designed to be attached to a flange of the first telescopic part by means of screw joint. Hereby, the holding element can easily be removed so as to thereby release the sliding element when it is necessary to exchange the sliding element for a new sliding element due to wearing down or other damage.

According to another embodiment of the invention, the telescopic device comprises a spacer plate, which by means of the holding element is attachable to said wall of the first telescopic part between the wall and the sliding element and which is provided with an opening designed to receive the projection of the sliding element. By arranging such a spacer plate of suitable thickness between the sliding element and the wall of the first telescopic part, the position of the upper side of the sliding element can be adjusted to fit to the prevailing play between the two telescopic parts.

According to another embodiment of the invention, the hole of the sliding element extends to a lubricant groove arranged in the upper side of the body in order to allow feeding of lubricant to this lubricant groove through the hole, the pin being hollow in order to allow feeding of lubricant into the hole through the pin. Through the hole in the sliding element and the pin, lubricant can be fed into the lubricant groove also at occasions when the lubricant groove is not accessible from the upper side of the sliding element. Consequently, possibilities are hereby created for a refilling of lubricants into the lubricant groove when the sliding element is in place between two telescopic parts with one of the telescopic parts in contact with the upper side of the sliding element and with the pin received in the hole. In this case, the pin will consequently perform the function of a feeding member for lubricant as well as a securing member for securing the sliding element to the first telescopic part.

According to another embodiment of the invention, an inlet nozzle with a non-return valve is fixed to the holding element and connected to the pin in order to allow feeding of lubricant to the pin through this inlet nozzle. Owing to the non-return valve, lubricant is prevented from flowing back out of the hole in the sliding element through the pin, and lubricant can in a simple manner be fed into the hole by connecting a feeding device, through a hose or the like, to the inlet nozzle fixed to the holding element.

Other favourable features of the telescopic device according to the present invention will appear from the dependent claims and the description following below.

### BRIEF DESCRIPTION OF THE DRAWINGS

The invention will in the following be more closely described by means of embodiment examples, with reference to the appended drawings. It is shown in:
- Fig 1: a perspective view from above of a sliding element intended to be included in a telescopic device according to an embodiment of the present invention,
- Fig 2: a perspective view from below of the sliding element according to Fig 1,
- Fig 3: a longitudinal section across the sliding element according to Fig 1,
- Fig 4: a schematic perspective view of an end section of a telescopic crane boom part provided with two sliding elements of the type illustrated in Figs 1-3,
- Fig 5: a schematic perspective view of the telescopic crane boom part according to Fig 4, shown without sliding elements,
- Fig 6: a schematic perspective view of a holding element for a sliding element of the type illustrated in Figs 1-3,
- Fig 7: a longitudinal section across two telescopic crane boom parts and a sliding element of the type illustrated in Figs 1-3 arranged between these crane boom parts,
- Fig 8: a schematic perspective view of an end section of a telescopic crane boom part provided with two sliding elements of an alternative type,
- Fig 9: a longitudinal section across a sliding element of the type illustrated in Fig 8,
- Fig 10: a schematic perspective view of a spacer plate for a sliding element, and
- Fig 11: a longitudinal section across two telescopic crane boom parts and a sliding element of the type illustrated in Figs 8 and 9 arranged between these crane boom parts.

### DETAILED DESCRIPTION OF PREFERRED EMBODIMENTS

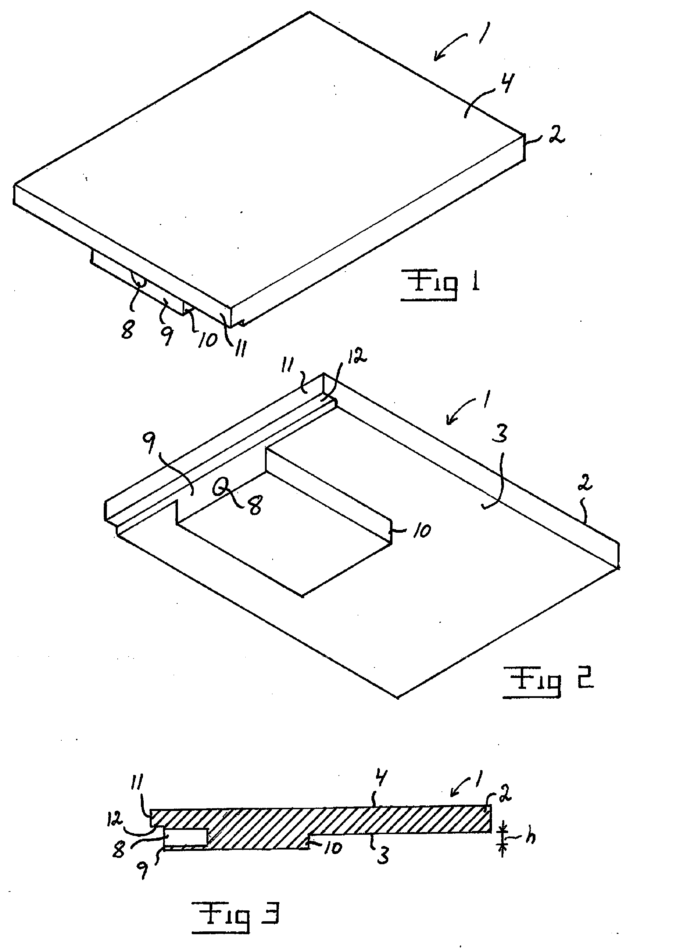

A sliding element 1 intended to be arranged between two mutually displaceable telescopic parts of a telescopic device according to an embodiment of the present invention is illustrated in Figs 1-3. This sliding element 1 comprises a plate-shaped body 2, which is made of a material with low coefficient of friction, such as for instance a suitable plastic material or a suitable metallic or ceramic material. Suitable materials may for instance be Robalon-Z, POLYform (POM), brass, ceramics or the similar. The body 2 may be rectangular as seen in a planar view, as shown in Fig 1, or have any other suitable shape as seen in a planar view, for instance circular or elliptical.

The plate-shaped body 2 of the sliding element has an underside 3, through which the sliding element 1 is intended to rest against a support surface of a first telescopic part to which the sliding element is mounted, and an opposite upper side 4, which constitutes a sliding surface and through which the sliding element 1 is intended to be in sliding contact with a surface of a second telescopic part. A hole 8 is arranged in an external edge surface 9 of the sliding element 1. This hole 8 suitably extends in parallel or at least essentially in parallel with the upper side 4 of the body.

A projection 10 is arranged on the underside 3 of the body. This projection 10 projects downwards from the underside 3 of the body. The projection 3 extends to the edge surface 9 of the sliding element that is provided with the hole 8, and the hole 8 is arranged in this projection. The projection 10 has a width that is smaller than the width of the body 2 of the sliding element and a length that is smaller than the length of said body. In the illustrated example, the lateral edges of the projection extend perpendicularly to the underside 3 of the body, and the projection 10 has a rectangular cross-sectional shape in this case. In the illustrated example, the projection 10 also has a rectangular shape as seen in a planar view. The projection 10 and the plate-shaped body 2 are suitably made in one piece, for instance by injection moulding.

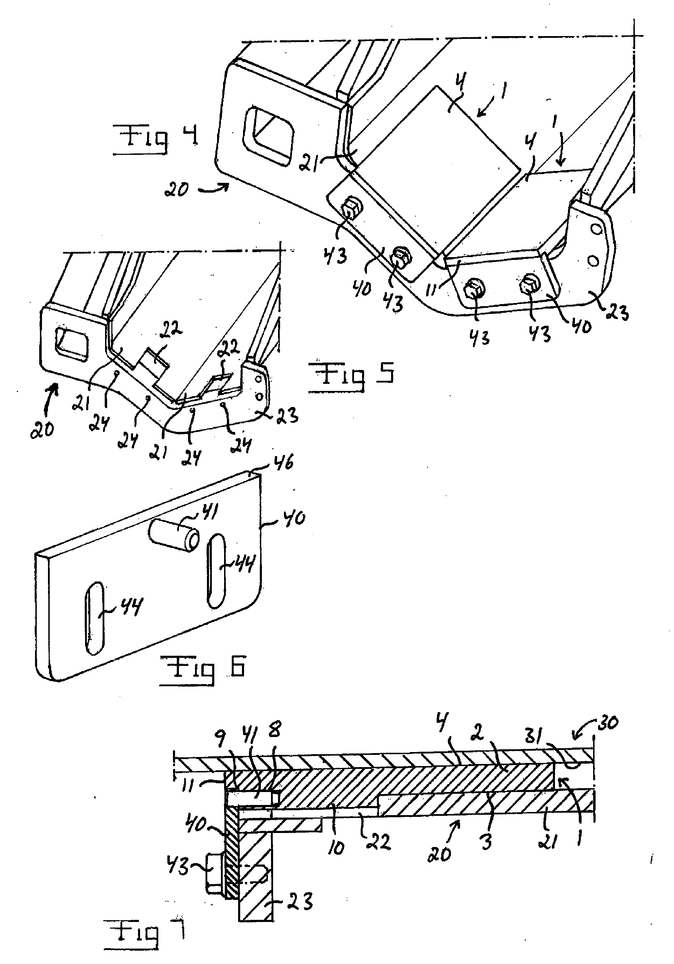

Fig 4 shows two sliding elements 1 of the type described above mounted to an end of a telescopic part 20, which in the following is denominated first telescopic part. The sliding elements 1 are attached to a wall 21 of the first telescopic part 20 and this first telescopic part is intended to be in sliding contact with a second telescopic part 30 (see Fig 7) through these sliding elements. The projection 10 of the respective sliding element 1 is designed for insertion into a recess 22 (see Fig 5), which is arranged in the wall 21 of the first telescopic part 20. The respective recess 22 is consequently designed to receive the projection 10 of a sliding element and has a shape essentially corresponding to the shape of the projection of the sliding element to thereby limit the displaceability of the sliding element in a plane parallel to the wall 21 when the projection 10 is received in the recess 22.

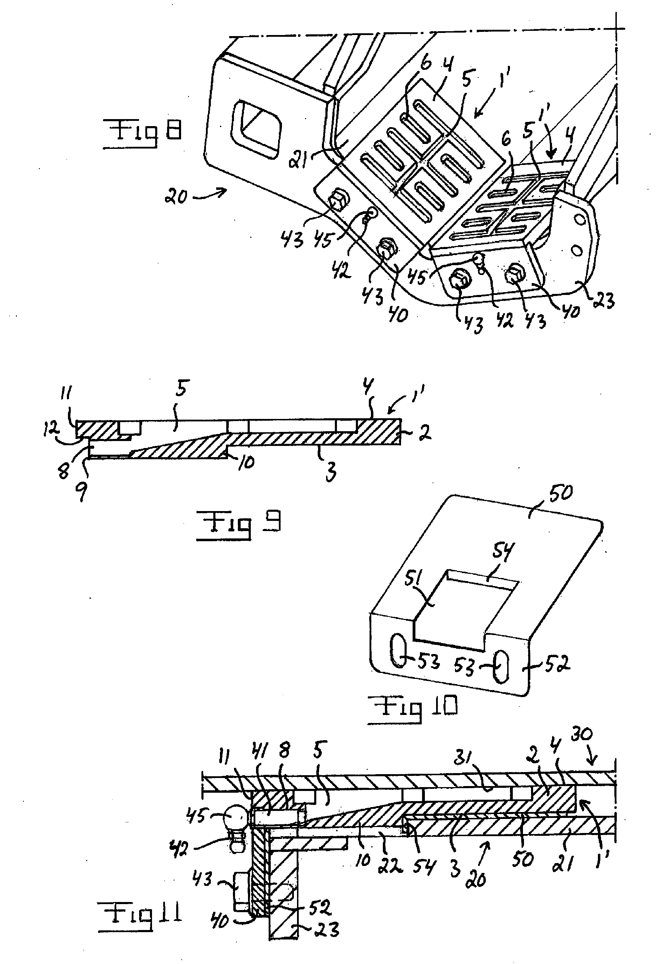

Consequently, the projection 10 acts as a stop lug which contributes to keep the sliding element in place to the wall 21. In the illustrated example, the respective recess 22 has a rectangular shape corresponding to the rectangular shape of the projection 10 of the sliding element. When the projection 10 is inserted into the associated recess 22, the body 2 rests, through the surface of the underside 3 that surrounds the projection 10, against the surface of the wall 21 that surrounds the recess 22, whereas lateral edges of the projection abut against the edges of the recess. The sliding element 1 may either rest directly against the wall 21 or rest against the wall through a spacer plate 50, as will be more closed described below with reference to Figs 10 and 11.

A holding element 40 is attached to a flange 23, which is arranged at the end of the first telescopic part 20. A pin 41 is in its turn fixed to the holding element 40. This pin 41 projects from the holding element 40 and is insertable into the hole 8 of the sliding element, as illustrated in Fig 7. The pin 41 is designed to keep the sliding element 1 secured to the first telescopic part 20 through engagement in the hole 8, with the pin preventing a displacement of the sliding element away from the wall 21 in a direction perpendicular to the wall. The pin 41 may be fixedly connected to the holding element 40 or removably fixed to the holding element. The holding element 40 may with advantage have the shape of a plate and be attachable to said flange 23 by means of screw joint, as illustrated in Figs 4 and 7. In the illustrated example, the holding element 40 is attached to the flange 23 by means of two screws 43, which extend through a respective through recess 44 in the holding element and are screwed into a respective threaded hole 24 in the flange 23. These recesses 44 suitably have an elongated shape as seen in a direction perpendicular to the wall 21, as illustrated in Fig 6, so as to thereby make possible an adjustment of the position of the holding element in relation to the flange 23 in the last-mentioned direction.

In the illustrated embodiment, the projection 10 has a height h (see Fig 3) from the underside 3 of the body that is smaller than or equal to the thickness of the wall 21. Furthermore, the recess 22 is open towards the end of the wall. In this case, the holding element 40 is designed to abut, when attached to said flange 23, against an external edge surface 9 of the sliding element 1 to thereby prevent the projection 10 from being displaced in a plane parallel to the wall 21 out of the recess 22. The last-mentioned edge surface 9 and the edge surface that is provided with the hole 8 are suitably one and the same edge surface of the sliding element. The edge surface 9 suitably extends perpendicularly to the upper side 4 and the underside 3 of the body 2 of the sliding element, as illustrated in Figs 1-3. The edge surface 9 is suitably retracted in relation to the adjacent external edge surface 11 of the body 2 of the sliding element so that a shoulder 12 is formed between these edge surfaces 9, 11. The upper edge 46 of the holding element is intended to abut against this shoulder 12 of the sliding element.

When the sliding element 1 is to be attached to the first telescopic part 20, the sliding element is applied with the underside 3 of the body 2 against the wall 21 of the telescopic part and with the projection 10 inserted into an associated recess 22 in the wall. Thereafter, the holding element 40 is moved towards the edge surface 9 of the sliding element so that the pin 41 that projects from the holding element is pushed into the hole 8. The holding element 40 is then secured to the flange 23 by screwing, whereby the sliding element 1 is secured to the wall 21 under the effect of the holding element 40 and the pin 41. The holding element 40 and the edges of the recess 22 will prevent a displacement of the sliding element 1 in relation to the first telescopic part 20 in a plane parallel to the wall 21, at the same time as the 41 pin prevents a displacement of the sliding element 1 away from the wall 21 in a direction perpendicular to the wall.

When the sliding element has been installed, the upper side 4 of the body is intended to be in sliding contact with a surface 31 of a second telescopic part 30 so as to thereby form a sliding surface between this second telescopic part 30 and the first telescopic part 20. These two telescopic parts 20, 30 are arranged to be displaceable in relation to each other in a plane extending in parallel with the upper side 4 of the body and they may be arranged to rest against each other through the sliding element 1. In Fig 7, a sliding element 1 is shown mounted to a first telescopic part 20 in the above-described manner and with a second telescopic part 30 in sliding contact with the upper side 4 of the body 2 of the sliding element.

In the embodiment illustrated in Fig 8, the sliding elements 1' that are attached to the first telescopic part 20 are provided with elongated lubricant grooves 5, 6 for receiving lubricant, for instance in the form of oil. In the respective sliding element 1', these lubricant grooves 5, 6 are arranged in the upper side 4 of the plate-shaped body. The lubricant grooves 5, 6 are formed as depressions in the upper side 4. The respective lubricant groove 5, 6 is consequently open at the top and is provided with a bottom surface, which is lowered from the upper side 4 and which closes the lubricant groove at the bottom. The respective lubricant groove 5, 6 does not extend all the way to the edges of the body, and lubricant can thereby be retained in the lubricant groove.

With the exception of the lubricant grooves 5, 6, the respective sliding element 1' is designed in the same manner as the sliding element 1 illustrated in Figs 1-3 and described above.

In the example illustrated in Fig 8, the respective sliding element 1' is in its upper side 4 provided with four shorter lubricant grooves 6 and one longer lubricant groove 5. The longer lubricant groove 5 comprises a central section extending rectilinearly along the longitudinal axis of the sliding element, and three transverse sections extending perpendicularly to the central section. The transverse sections cross the central section and are connected to the central section so that lubricant received in the central section may flow from the central section further on to the transverse sections.

The last-mentioned lubricant groove 5 is connected to the hole 8 that extends inside the sliding element 1'. Through the hole 8, lubricant can be fed into this lubricant groove 5. In the illustrated example, the hole 8 runs into a deepened part of the central section of the lubricant groove, as shown in Fig 9.

In the embodiment illustrated in Fig 8, the pin 41 that is fixed to the respective holding element 40 is hollow and open at its ends so that a flow-through channel for lubricant is formed inside the pin. Hereby, lubricant can be fed into the hole 8 of the sliding element through the pin 41. An inlet nozzle 42 with a non-return valve 45 is also fixed to the holding element 40 and connected to the pin 41 in order to allow feeding of lubricant to the pin through the inlet nozzle. The inlet nozzle 42 may be screwed directly onto the pin 41 through an internal thread at the end of the pin that faces the holding element 40 and a corresponding external thread on the inlet nozzle. In the installed state, the pin 41 extends into the hole 8 of the sliding element and by connecting a lubricant receptacle to the inlet nozzle 42, for instance through a hose or the similar, lubricant can be introduced into the lubricant groove 5 through the inlet nozzle 42, the pin 41 and the hole 8.

In Fig 11, a sliding element 1' is shown mounted to a first telescopic part 20 in the above-described manner and with a second telescopic part 30 in sliding contact with the upper side 4 of the body 2 of the sliding element. As appears from this figure, lubricant can be introduced into the lubricant groove 5 through the inlet nozzle 42, the pin 41 and the hole 8 while the second telescopic part 30 remains in contact with the upper side 4 of the body, i.e. without requiring any separation of the two telescopic parts 20, 30 from each other.

In the example illustrated in Fig 11, a spacer plate 50 is placed between the underside 3 of the body 2 of the sliding element and the wall 21. This spacer plate 50 is illustrated in Fig 10 and is provided with an opening 51 designed to receive the projection 10 of the sliding element. This opening 51 has a shape corresponding to the shape of the recess 22 in the wall 21 and is intended to be located above this recess 22 when the spacer plate 50 is in place between the sliding element 1' and the wall 21. At one end, in connection with the opening 51, the spacer plate 50 is provided with a downwardly projecting mounting flange 52, which is intended to be clamped between the holding element 40 and the flange 23 of the first telescopic part when the holding element is secured by screwing to the last-mentioned flange 23. Recesses 53 for receiving the screws 43 are arranged in the mounting flange 52. The recesses 53 of the mounting flange are intended to be aligned with the recesses 44 of the holding element 40 and suitably has the same shape as these. At the inner edge of the opening 51, the spacer plate is provided with a downwardly projecting support lug 54, which has the same thickness as the mounting flange 52 and is intended to abut against the inner edge of the recess 22 in the wall 21. The spacer plate 50 is with advantage made by punching and bending of a piece of plate. By providing spacer plates 50 of different thicknesses it will be possible to adapt a sliding element 1, 1' of the type in question to the prevailing play between two telescopic parts by choosing a spacer plate of suitable thickness.

The telescopic device according to the present invention may for instance have the form of a telescopic crane boom or a telescopic support leg, in which case the sliding element 1, 1' is installed between two telescopic crane boom parts or between two telescopic support leg parts.

The invention is of course not in any way limited to the embodiments described above. On the contrary, several possibilities to modifications thereof should be apparent to a person skilled in the art without thereby deviating from the basic idea of the invention as defined in the appended claims.

## Claims

1. A telescopic device, particularly in the form of a telescopic crane boom or a telescopic support leg, comprising at least two mutually displaceable telescopic parts (20, 30) and a sliding element (1; 1'), which is attachable to a wall (21) of a first telescopic part (20) and through which this first telescopic part (20) is intended to be in sliding contact with a second telescopic part (30), wherein the sliding element (1; 1') comprises a plate-shaped body (2) with an underside (3), through which the sliding element is intended to rest against a support surface of the first telescopic part (20), and an upper side (4), which constitutes a sliding surface and through which the sliding element is intended to be in sliding contact with a surface (31) of the second telescopic part (30), and wherein a hole (8) is arranged in an external edge surface (9) of the sliding element (1; 1'), **characterized in:**
- **that** a projection (10) is arranged on the underside (3) of the body, said hole (8) or at least a part thereof being arranged in this projection (10);
- **that** said wall (21) of the first telescopic part (20) is provided with a recess (22), which is designed to receive the projection (10) of the sliding element and which has a shape essentially corresponding to the shape of this projection (10) to thereby limit the displaceability of the sliding element in a plane parallel to this wall (21) when the projection (10) is received in the recess (22); and
- **that** the telescopic device comprises a holding element (40), which is attachable to the first telescopic part (20), and a pin (41), which is fixed to the holding element and which is insertable into said hole (8) of the sliding element, the pin (41) being designed to keep the sliding element (1; 1') secured to the first telescopic part (20) by engagement in the hole (8).

2. A telescopic device according to claim 1, **characterized in that** the holding element (40) is designed to abut against an external edge surface (9) of the sliding element, preferably against the external edge surface in which the hole (8) is arranged, to thereby limit the displaceability of the sliding element in a plane parallel to said wall (21).

3. A telescopic device according to claim 1 or 2, **characterized in that** the holding element (40) is designed to be attached to a flange (23) of the first telescopic part (20).

4. A telescopic device according to claim 3, **characterized in that** the holding element (40) is designed to be attached to said flange (23) by means of screw joint.

5. A telescopic device according to any of claims 1-4, **characterized in that** the telescopic device comprises a spacer plate (50), which by means of the holding element (40) is attachable to said wall (21) of the first telescopic part (20) between the wall (21) and the sliding element (1; 1') and which is provided with an opening (51) designed to receive the projection (10) of the sliding element.

6. A telescopic device according to any of claims 1-5, **characterized in:**
- **that** the hole (8) of the sliding element extends to a lubricant groove (5) arranged in the upper side (4) of the body, in order to allow feeding of lubricant into this lubricant groove (5) through the hole (8); and
- **that** the pin (41) is hollow in order to allow feeding of lubricant into the hole (8) through the pin.

7. A telescopic device according to claim 6, **characterized in that** an inlet nozzle (42) with a non-return valve (45) is fixed to the holding element (40) and connected to the pin (41) in order to allow feeding of lubricant into the pin through this inlet nozzle.

8. A telescopic device according to any of claims 1-7, **characterized in that** the holding element (40) has the shape of a plate.

9. A telescopic device according to any of claims 1-8, **characterized in that** the hole (8) of the sliding element extends inside the sliding element (1; 1') in parallel or at least essentially in parallel with the upper side (4) of the body.

## Patentansprüche

1. Teleskopvorrichtung, insbesondere in der Form eines ausfahrbaren Kranauslegers oder eines ausfahrbaren Stützfußes, umfassend mindestens zwei gegeneinander verschiebliche Teleskopteile (20, 30) und ein Gleitelement (1; 1'), welches an eine Wand (21) eines ersten Teleskopteils (20) anbringbar ist und durch welches dieses erste Teleskopteil (20) in gleitendem Kontakt mit einem zweiten Teleskopteil (30) sein soll, wobei das Gleitelement (1; 1') einen plattenförmigen Körper (2) mit einer Unterseite (3) umfasst, durch welchen das Gleitelement an einer Stützfläche des ersten Teleskopteils (20) anliegen soll, sowie mit einer Oberseite (4), welche eine Gleitfläche bildet und durch welche das Gleitelement in gleitendem Kontakt mit einer Fläche (31) des zweiten Teleskopteils (30) sein soll, und wobei ein Loch (8) in einer äußeren Kantenfläche (9) des Gleitelementes (1; 1') angeordnet ist, **dadurch gekennzeichnet dass**:
• ein Vorsprung (10) an der Unterseite (3) des Körpers angeordnet ist, wobei das Loch (8) oder mindestens ein Teil davon in diesem Vorsprung (10) angeordnet ist;
• die Wand (21) des ersten Teleskopteils (20) mit einer Ausnehmung (22) versehen ist, welche den Vorsprung (10) des Gleitelements aufnehmen soll und welche eine Form hat, die im Wesentlichen der Form dieses Vorsprungs (10) entspricht, um dadurch die Verschieblichkeit des Gleitelementes in einer Ebene parallel zu dieser Wand (21) zu begrenzen, wenn der Vorsprung (10) in der Ausnehmung (22) aufgenommen ist; und
• die Teleskopvorrichtung ein Haltelement (40) umfasst, welches an dem ersten Teleskopteil (20) anbringbar ist, sowie einen Bolzen (41), welcher an dem Haltelement befestigt ist und welcher in das Loch (8) des Gleitelementes eingeführt werden kann, wobei der Bolzen (41) dazu ausgestaltet ist, das Gleitelement (1; 1') durch Eingriff in das Loch (8) an dem ersten Teleskopteil (20) festzuhalten.

2. Teleskopvorrichtung gemäß Anspruch 1, **dadurch gekennzeichnet dass** das Haltelement (40) dazu ausgestaltet ist, gegen eine äußere Kantenfläche (9) des Gleitelementes anzustoßen, vorzugsweise gegen die äußere Kantenfläche in welcher das Loch (8) angeordnet ist, um dadurch die Verschieblichkeit des Gleitelementes in einer Ebene parallel zu der Wand (21) zu begrenzen

3. Teleskopvorrichtung gemäß Anspruch 1 oder 2, **dadurch gekennzeichnet dass** das Haltelement (40) dazu ausgestaltet ist, an einem Flansch (23) des ersten Teleskopteils (20) angebracht zu werden.

4. Teleskopvorrichtung gemäß Anspruch 3, **dadurch gekennzeichnet dass** das Haltelement (40) dazu ausgestaltet ist, an dem Flansch (23) mittels einer Schraubverbindung angebracht zu werden.

5. Teleskopvorrichtung gemäß irgendeinem der Ansprüche 1 bis 4, **dadurch gekennzeichnet dass** die Teleskopvorrichtung eine Abstandshalterplatte (50) aufweist, welche mittels des Haltelementes (40) zwischen der Wand (21) und dem Gleitelement (1; 1') an der Wand (21) des ersten Teleskopteils (20) anbringbar ist, und welche mit einer Öffnung (51) versehen ist, die dazu ausgestaltet ist, den Vorsprung (10) des Gleitelementes aufzunehmen.

6. Teleskopvorrichtung gemäß irgendeinem der Ansprüche 1 bis 5, **dadurch gekennzeichnet dass**
• das Loch (8) des Gleitelements sich zu einer in der Oberseite (4) des Körpers angeordneten Schmierstoffrille (5) erstreckt, um Zufuhr von Schmierstoff in diese Schmierstoffrille (5) durch das Loch (8) hindurch zu ermöglichen; und
• der Bolzen (41) hohl ist, um Zufuhr von Schmierstoff in das Loch (8) durch den Bolzen hindurch zu ermöglichen.

7. Teleskopvorrichtung gemäß Anspruch 6, **dadurch gekennzeichnet dass** eine Einlassdüse (42) mit einem Rückschlagventil (45) an dem Haltelement (40) befestigt ist und mit dem Bolzen (41) verbunden ist, um Zufuhr von Schmierstoff in den Bolzen durch diese Einlassdüse hindurch zu ermöglichen.

8. Teleskopvorrichtung gemäß irgendeinem der Ansprüche 1 bis 7, **dadurch gekennzeichnet dass** das Haltelement (40) die Form einer Platte hat.

9. Teleskopvorrichtung gemäß irgendeinem der Ansprüche 1 bis 8, **dadurch gekennzeichnet dass** das Loch (8) des Gleitelements sich innerhalb des Gleitelementes (1; 1') parallel oder mindestens im Wesentlichen parallel zu der Oberseite (4) des Körpers erstreckt.

## Revendications

1. Dispositif télescopique, en particulier sous la forme d'une potence télescopique de grue ou d'une jambe télescopique de support, comprenant au moins deux parties (20, 30) télescopiques déplaçables mutuellement et un élément (1, 1') de coulissement, qui peut être adjoint à une paroi (21) d'une première partie (20) télescopique et par lequel cette première partie (20) télescopique est destinée à être en contact glissant avec une seconde partie (30) télescopique, l'élément (1, 1') de coulissement comprenant un corps (2) en forme de plateau ayant une face (3) inférieure, par laquelle l'élément de coulissement est destiné à reposer sur une surface de support de la première partie (20) télescopique et une face (4) supérieure, qui constitue une surface de glissement et par laquelle l'élément de coulissement est destiné à être en contact glissant avec une surface (31) de la seconde partie (30) télescopique, un trou (8) étant ménagé dans une surface (9) extérieure du bord de l'élément (1, 1') de coulissement, **caractérisé**
- **en ce qu'**une saillie (10) est ménagée sur la face (3) inférieure du corps, le trou (8) ou au moins une partie de celui-ci étant ménagé dans cette saillie (10) ;
- **en ce que** la paroi (21) de la première partie (20) télescopique est munie d'une cavité (22), qui est conçue pour recevoir la saillie (10) de l'élément de coulissement et qui a une forme correspondant essentiellement à la forme de cette saillie (10), pour limiter ainsi l'aptitude à se déplacer de l'élément de coulissement dans un plan parallèle à cette paroi (21) quand la saillie (10) est reçue dans la cavité (22) et
- **en ce que** le dispositif télescopique comprend un élément (40) de maintien, qui peut être adjoint à la première partie (20) télescopique, et une broche (41), qui est fixée à l'élément de maintien et qui peut être insérée dans le trou (8) de l'élément de coulissement, la broche (41) étant conçue pour maintenir l'élément (1, 1') de coulissement fixé à la première partie (20) télescopique par engrènement dans le trou (8).

2. Dispositif télescopique suivant la revendication 1, **caractérisé en ce que** l'élément (40) de maintien est conçu pour buter sur une surface (9) extérieure de bord de l'élément de coulissement, de préférence sur la surface extérieure de bord dans lequel le trou (8) est ménagé, pour limiter ainsi l'aptitude à se déplacer de l'élément de coulissement dans un corps parallèle à la paroi (21).

3. Dispositif télescopique suivant la revendication 1 ou 2, **caractérisé en ce que** l'élément (40) de maintien est conçu pour être adjoint à un rebord (23) de la première partie (20) télescopique.

4. Dispositif télescopique suivant la revendication 3, **caractérisé en ce que** l'élément (40) de maintien est conçu pour être adjoint au rebord (23) au moyen d'un joint à vis.

5. Dispositif télescopique suivant l'une quelconque des revendications 1 à 4, **caractérisé en ce que** le dispositif télescopique comprend une plaque (50) d'entretoisement, qui, au moyen de l'élément (40) de maintien, peut être adjointe à la paroi (21) de la première partie (20) télescopique entre la paroi (21) et l'élément (1, 1') de coulissement et qui est munie d'une ouverture (51) conçue pour recevoir la saillie (10) de l'élément de coulissement.

6. Dispositif télescopique suivant l'une quelconque des revendications 1 à 5, **caractérisé**
- **en ce que** le trou (8) de l'élément de coulissement s'étend à une rainure (5) à lubrifiant, ménagée sur la face (4) supérieure du corps, afin de permettre une alimentation en lubrifiant de cette rainure (5) à lubrifiant par l'intermédiaire du trou (8) et
- **en ce que** la broche (41) est creuse afin de permettre d'alimenter en lubrifiant le trou (8) par la broche.

7. Dispositif télescopique suivant la revendication 6, **caractérisé en ce qu'**une buse (42) d'entrée ayant un clapet anti-retour (45) est fixée à l'élément (40) de maintien et est reliée à la broche (41) afin de permettre une alimentation à lubrifiant de la broche par cette buse d'entrée.

8. Dispositif télescopique suivant l'une quelconque des revendications 1 à 7, **caractérisé en ce que** l'élément (40) de maintien a la forme d'une plaque.

9. Dispositif télescopique suivant l'une quelconque des revendications 1 à 8, **caractérisé en ce que** le trou (8) de l'élément de coulissement s'étend à l'intérieur de l'élément (1, 1') de coulissement parallèlement ou au moins sensiblement parallèlement à la face (4) supérieure du corps.
